# FASCICULE DE BREVET EUROPEEN

(11) **EP 0 636 214 B1**
(45) Date de publication et mention de la délivrance du brevet: **03.04.1996**
(21) Numéro de dépôt: 93907914.1
(22) Date de dépôt: 31.03.1993
(51) Int. Cl.: F16B 7/14

(54) **ENSEMBLE TUBULAIRE TELESCOPIQUE**
TELESKOPISCHE ROHRANORDNUNG
TELESCOPING TUBULAR ASSEMBLY

(30) Priorité: 14.04.1992 FR 9204873
(43) Date de publication de la demande: 01.02.1995
(73) Titulaire: SIMOND, Ludger, F-74400 Chamonix-Mont-Blanc (FR)
(72) Inventeur: SIMOND, Ludger, F-74400 Chamonix-Mont-Blanc (FR)
(74) Mandataire: Poncet, Jean-François
(86) Numéro de dépôt international: FR9300322
(87) Numéro de publication internationale: WO9321448

(56) Documents cités:
- EP-A- 0 217 556
- EP-A- 0 314 357
- EP-A- 0 423 990
- FR-A- 1 256 016

## Description

La présente invention concerne les tiges télescopiques comprenant plusieurs tronçons tubulaires successifs coulissant les uns dans les autres entre une position rétractée et une position déployée.

Les tiges télescopiques sont utilisées dans divers domaines, et permettent notamment un réglage de longueur dans une plage de variation choisie.

L'invention concerne plus spécialement un tel ensemble tubulaire télescopique comprenant au moins un premier tronçon tubulaire de plus grand diamètre et un second tronçon tubulaire de plus petit diamètre, le second tronçon tubulaire ayant une extrémité intérieure logée à l'intérieur du premier tronçon tubulaire et étant montée à rotation libre et à coulissement dans le premier tronçon tubulaire entre une position rétractée et une position déployée.

Pour bloquer le coulissement entre deux tronçons tubulaires successifs, on a déjà proposé d'utiliser une bague expansible par exemple telle que décrite dans le document EP-A-0 217 556. La bague est montée à l'intérieur du premier tronçon tubulaire et est comprimée axialement entre un embout axial solidaire du second tronçon tubulaire et un moyen de serrage opposé se vissant sur l'embout axial, des portées coniques correspondantes assurant l'expansion des extrémités de la bague qui vient porter contre la surface intérieure du premier tronçon tubulaire. Un blocage en rotation entre le moyen de serrage et le premier tronçon tubulaire assure le vissage du moyen de serrage lors de la rotation relative des éléments tubulaires. L'expansion de la bague produit des forces de frottement qui s'opposent à tout déplacement axial des tronçons tubulaires l'un par rapport à l'autre. Toutefois, un tel dispositif connu à bague expansible présente l'inconvénient de réaliser le blocage par une faible surface de la bague expansible. Il en résulte un blocage insuffisant pour couvrir un grand nombre d'applications.

### RESUME DE L'INVENTION

Le problème proposé par la présente invention est d'augmenter la force de verrouillage obtenue par une bague de verrouillage expansible, sans augmenter exagérément le nombre des pièces nécessaires et la difficulté de fabrication ou d'assemblage, et sans augmenter la résistance au coulissement axial lorsque le dispositif est déverrouillé.

Pour cela, l'invention prévoit des moyens permettant de réaliser l'expansion de la bague en deux zones axialement décalées et de longueurs sensiblement augmentées, répartissant de façon appropriée les déformations de la bague et augmentant sensiblement la surface de frottement entre la bague et le premier tronçon tubulaire dans lequel elle est insérée.

Pour cela, on prévoit un moyen de serrage comprenant une tête coulissant librement dans le premier tronçon tubulaire et portant contre une surface d'extrémité de la bague. La bague comporte une partie centrale à trou axial sensiblement cylindrique, et deux parties d'extrémité à trou axial dont le trou axial est de plus grand diamètre et se raccorde au trou de partie centrale respectivement par une première portée conique intérieure et par une seconde portée conique intérieure. La première portée conique intérieure de bague vient en appui sur une portée conique extérieure correspondante de l'embout axial. La seconde portée conique intérieure de bague vient en appui sur une portée conique extérieure correspondante de la tête de moyen de serrage. Des fentes longitudinales sont prévues dans la bague dans les deux zones correspondant aux portées coniques intérieures de la bague. Les fentes occupent sensiblement la demi-longueur de la bague, partant de chaque extrémité, et les portées coniques intérieures de la bague sont ménagées sensiblement au tiers et aux deux tiers de la longueur de la bague.

Divers moyens peuvent être utilisés pour relier la tête de moyen de serrage et le second tronçon tubulaire.

### BREVE DESCRIPTION DES DESSINS

Les objets, caractéristiques et avantages de la présente invention ressortiront de la description suivante de modes de réalisation particuliers, faite en relation avec les figures jointes, parmi lesquelles :
- la figure est une vue de face, en coupe partielle, de la zone de verrouillage entre deux tronçons successifs d'un ensemble tubulaire télescopique selon l'invention ;
- la figure 2 est une vue de face éclatée des pièces constituant la zone de verrouillage de la figure 1 ;
- la figure 3 illustre la section transversale de l'écrou de la figure 2 ;
- la figure 4 est une coupe de la bague de verrouillage selon le plan C-C de la figure 2 ;
- la figure 5 est une coupe de la bague de verrouillage selon le plan D-D de la figure 2 ;
- la figure 6 est une vue de face en coupe partielle montrant une structure d'étanchéité entre deux tronçons tubulaires successifs, selon un premier mode de réalisation ; et
- la figure 7 représente un second mode de réalisation des moyens d'étanchéité entre deux trous tubulaires successifs.

### DESCRIPTION DES MODES DE REALISATION PREFERES

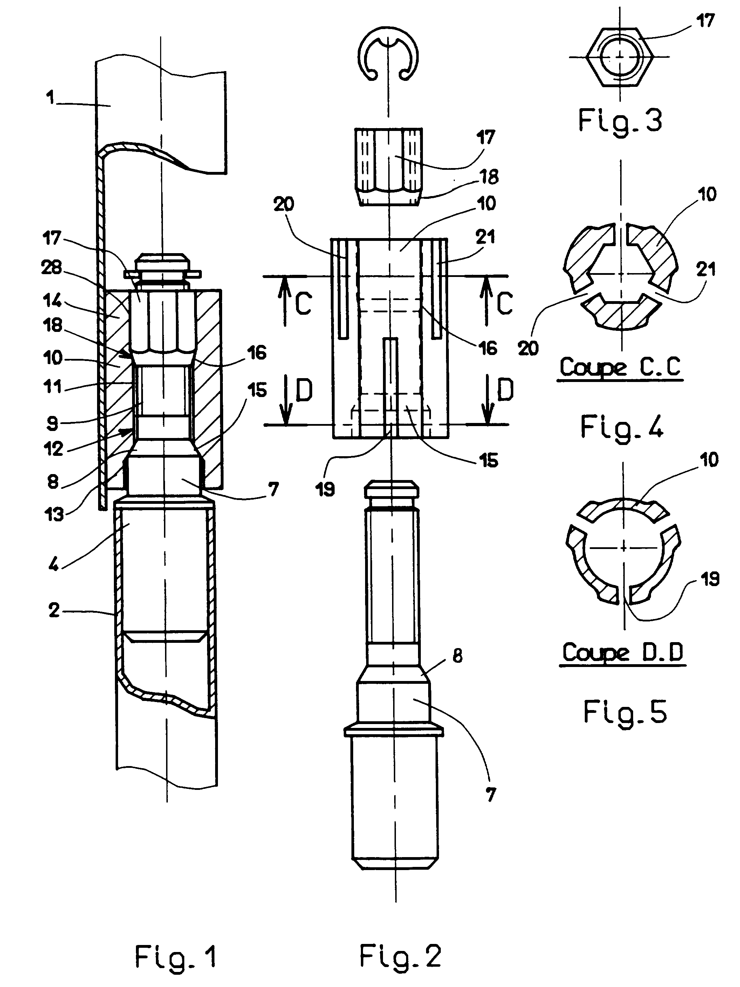

Dans le mode de réalisation représenté sur les figures 1 à 5, l'ensemble tubulaire télescopique comprend au moins un premier tronçon tubulaire 1 de plus grand diamètre et un second tronçon tubulaire 2 de plus petit diamètre. Le second tronçon tubulaire 2 a une extrémité intérieure 4 logée à l'intérieur du premier tronçon tubulaire 1 et montée à rotation libre et à coulissement dans le premier tronçon tubulaire 1 entre une position rétractée et une position déployée. L'extrémité intérieure 4 du second tronçon tubulaire 2 est destinée à rester en permanence à l'intérieur du premier tronçon tubulaire 1.

Le second tronçon tubulaire 2 porte, en prolongement de son extrémité intérieure 4, un embout axial 7 comportant une première portée généralement conique 8 se prolongeant par une partie filetée 9 de plus petit diamètre.

Une bague de verrouillage 10 comprend un trou axial 11 traversé par l'embout axial 7. Le trou axial 11 comprend une partie centrale 12 généralement cylindrique et deux parties d'extrémité 13 et 14 dont le trou axial est de plus grand diamètre et se raccorde au trou de partie centrale 12 respectivement par une première portée conique 15 intérieure de bague et par une seconde portée conique 16 intérieure de bague. Un écrou 17 est vissé sur la partie filetée 9 de l'embout axial 7. L'écrou 17 présente une section polygonale, par exemple une section hexagonale, telle que représentée sur la figure 3, et est logé à coulissement à faible jeu dans un logement axial correspondant 28 de la bague 10. Ainsi, dans ce logement 28, l'écrou 17 peut librement coulisser axialement, mais ne peut pas pivoter axialement, par l'effet de retenue de sa surface extérieure non circulaire portant contre une surface similaire intérieure du logement 28. L'écrou 17 se trouve ainsi solidarisé en rotation avec la bague 10, tandis qu'il peut coulisser axialement par rapport à la bague.

La bague 10 est avantageusement réalisée en une matière lui conférant une élasticité. Sa forme est telle que, en position déverrouillée, une portion au moins de sa surface externe reste en appui élastique contre la surface interne de premier élément tubulaire 1.

L'extrémité de l'écrou 17 comprend une surface annulaire conique 18, formant portée conique extérieure, qui vient porter contre la seconde portée conique 16 intérieure de la bague 10.

Deux séries respectives de fentes longitudinales sont ménagées dans les deux parties d'extrémité de la bague 10, comme le représentent les figures 2 à 5 : au voisinage de la première extrémité de la bague 10, on voit par exemple, sur la figure 2, une fente longitudinale 19 de la première série de fentes, dont la longueur est sensiblement égale à la demi-longueur de la bague 10. De même, dans la zone de seconde extrémité de la bague 10, on voit sur la figure 2 des fentes 20 et 21 longitudinales de la seconde série de fentes.

Les fentes telles que la fente 19 de la première série de fentes sont avantageusement imbriquées par rapport aux fentes telles que les fentes 20 et 21 de la seconde série de fentes.

Les portées coniques intérieures 15 et 16 de la bague 10 sont avantageusement disposées sensiblement au tiers et aux deux tiers de la longueur de la bague.

Le blocage en rotation de la bague 10 peut être assuré par le simple frottement entre la surface extérieure de bague 10 et la surface intérieure du premier tronçon tubulaire 1. On peut donc utiliser des tronçons tubulaires à sections transversales circulaires.

En alternative, on peut prévoir des moyens de blocage en rotation de la bague 10 entre la surface interne du premier tronçon tubulaire 1 et la surface externe de la bague 10. Par exemple, on peut prévoir une ou plusieurs nervures longitudinales dépassant de la face intérieure du premier tronçon tubulaire 1, et coulissant dans des rainures correspondantes périphériques de la bague 10.

La bague 10 peut avantageusement être réalisée en une matière plastique, assurant des capacités appropriées de déformation au voisinage des extrémités fendues.

Par la disposition particulière des fentes 19-21 et des portées coniques 15 et 16, on réalise une bague 10 en une seule pièce qui présente des capacités nettement améliorées de verrouillage. Ces capacités améliorées sont vraisemblablement dues à la meilleure répartition des surfaces de frottement entre la bague 10 et le premier tronçon tubulaire 1.

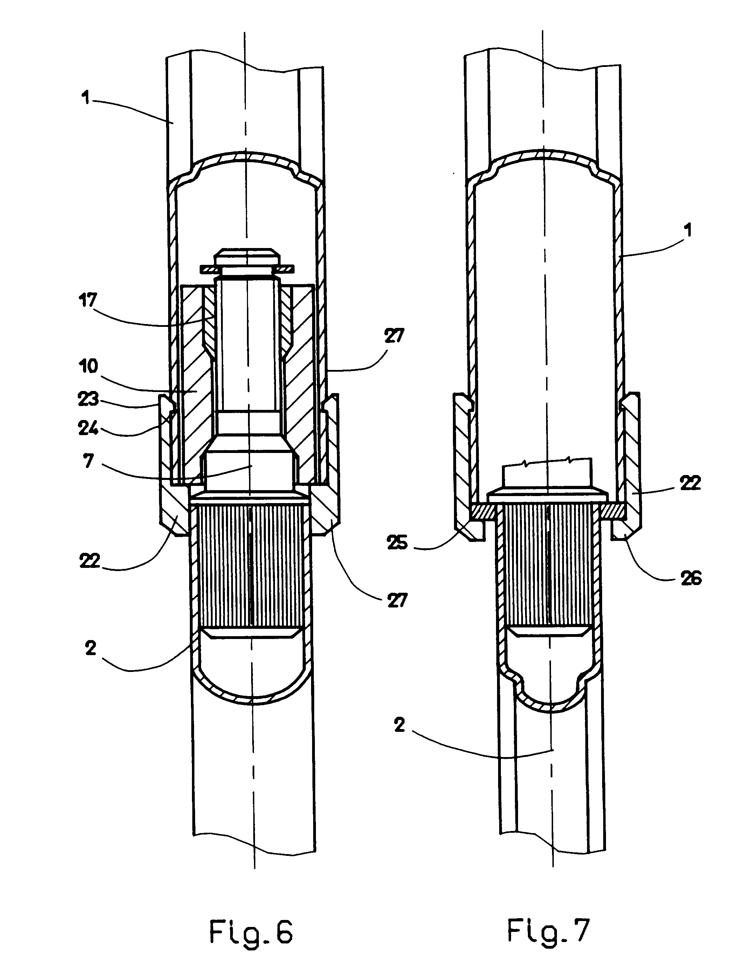

Sur la figure 6, on a représenté un premier mode de réalisation de moyens assurant l'étanchéité entre le premier tronçon tubulaire 1 et le second tronçon tubulaire 2.

L'étanchéité est assurée par une bague d'étanchéité 22 adaptée sur l'extrémité de recouvrement 27 du premier tronçon tubulaire 1, auquel elle est solidarisée axialement, mais par rapport auquel elle peut tourner librement. Une extrémité recourbée 26 de la bague vient coiffer la tranche du premier tronçon tubulaire et vient porter contre la surface périphérique du second tronçon tubulaire 2. Pour assurer sa solidarisation axiale, la bague d'étanchéité 22 comprend un rebord intérieur 23 venant s'engager dans une gorge annulaire extérieure 24 du premier tronçon tubulaire 1.

Dans le mode de réalisation de la figure 7, l'étanchéité est assurée par une bague d'étanchéité 22 qui recouvre l'extrémité du premier tronçon tubulaire 1. Dans ce cas, la bague 22 est solidarisée au premier tronçon tubulaire 1 à la fois en translation et en rotation. L'extrémité recourbée 26 de la bague 22 vient en regard de l'extrémité du second tronçon tubulaire 2. Toutefois, cette extrémité 26 de bague ne touche pas la paroi extérieure du second tronçon tubulaire 2, par rapport auquel elle peut librement tourner.

Une entretoise circulaire 25 formant joint est insérée entre le second tronçon tubulaire 2 et la bague de verrouillage 22, pour assurer l'étanchéité, et est ainsi coiffée par l'extrémité recourbée 26 de la bague 22 et logée entre ladite extrémité recourbée 26 et la tranche du premier tronçon tubulaire. L'avantage est que, lors des rotations relatives des tronçons tubulaires l'un par rapport à l'autre, la bague 22 ne tourne pas par rapport au premier tronçon tubulaire 1. L'entretoise coulisse sur le second tronçon tubulaire 2 et assure une bonne étanchéité, même dans les cas où la section transversale des éléments tubulaires n'est pas circulaire.

Dans les modes de réalisation précédents, la tête de moyen de serrage est formée par l'écrou 17, qui est relié au second élément tubulaire par une partie axiale proéminente filetée 9 de l'embout axial.

En alternative, le moyen de serrage de bague 10 peut comprendre une vis dont la tête forme la tête 17 du moyen de serrage et dont la tige filetée se visse dans un alésage taraudé axial de l'embout axial 7.

La présente invention n'est pas limitée aux modes de réalisation qui ont été explicitement décrits, mais elle en inclut les diverses variantes et généralisations contenues dans le domaine des revendications ci-après.

## Revendications

1. Ensemble tubulaire télescopique, comprenant :
- au moins un premier tronçon tubulaire (1) de plus grand diamètre et un second tronçon tubulaire (2) de plus petit diamètre, le second tronçon tubulaire (2) ayant une extrémité intérieure (4) logée à l'intérieur du premier tronçon tubulaire (1) et étant monté à rotation libre et à coulissement dans le premier tronçon tubulaire (1) entre une position rétractée et une position déployée,
- un embout axial (7) comportant une portée généralement conique (8) prolongeant l'extrémité intérieure (4) du second tronçon tubulaire (2) à l'intérieur du premier tronçon tubulaire (1),
- une bague expansible de verrouillage (10) à partie centrale (12) percée d'un trou axial (11) sensiblement cylindrique bordé d'une première portée intérieure (15) généralement conique pour venir en appui contre la portée généralement conique (8) de l'embout axial (7), et bordé d'une seconde portée intérieure (16) conique opposée, la bague comportant deux séries de fentes longitudinales (19, 20, 21) autorisant sa déformation radiale,
- un moyen de serrage (17) axial comprenant une tête munie d'une surface annulaire généralement conique (18) en appui contre la seconde portée conique (16) intérieure de bague, le moyen de serrage (17) axial étant adapté pour repousser sélectivement la bague (10) contre la portée généralement conique (8) d'embout axial (7), déformant ainsi radialement la bague vers l'extérieur pour la plaquer contre la paroi intérieure du premier tronçon tubulaire (1),
- des moyens de liaison pour solidariser axialement le moyen de serrage (17) et le second tronçon tubulaire (2),
caractérisé en ce que :
- la bague (10) comporte deux parties d'extrémité à trou axial (13, 14) dont le trou axial est de plus grand diamètre et se raccorde au trou de partie centrale (12) respectivement par la première portée conique (15) intérieure de bague et par la seconde portée conique (16) intérieure de bague,
- les fentes occupent sensiblement la demi-longueur de la bague (10),
- les portées coniques (15, 16) intérieures sont disposées sensiblement au tiers et aux deux tiers de la longueur de la bague (10).

2. Ensemble tubulaire télescopique selon la revendication 1,
caractérisé en ce que :
- les fentes (19) de la première série de fentes sont imbriquées par rapport aux fentes (20, 21) de la seconde série de fentes.

3. Ensemble tubulaire télescopique selon l'une des revendications 1 ou 2, caractérisé en ce que la tête du moyen de serrage (17) a une section polygonale et s'insère dans un logement axial (28) de bague (10) ayant une section polygonale correspondante, interdisant la rotation du moyen de serrage (17) par rapport à la bague (10).

4. Ensemble tubulaire télescopique selon l'une quelconque des revendications 1 à 3, caractérisé en ce que le moyen de serrage (17) est une vis dont la tête forme la tête du moyen de serrage (17), et dont la tige filetée se visse dans un alésage taraudé axial de l'embout axial (7).

5. Ensemble tubulaire télescopique selon l'une quelconque des revendications 1 à 3, caractérisé en ce que le moyen de serrage (17) est un écrou formant la tête du moyen de serrage (17) et se vissant sur une partie axiale proéminente filetée (9) de l'embout axial (7) traversant la bague (10).

6. Ensemble tubulaire télescopique selon l'une quelconque des revendications 1 à 5, caractérisé en ce que des nervures longitudinales sont prévues sur la face intérieure du premier tronçon tubulaire (1), lesdites nervures longitudinales s'engageant dans des rainures longitudinales correspondantes de la bague (10), pour solidariser en rotation la bague (10) par rapport au premier tronçon tubulaire (1).

7. Ensemble tubulaire télescopique selon l'une quelconque des revendications 1 à 6, caractérisé en ce que l'étanchéité entre le premier tronçon tubulaire (1) et le second tronçon tubulaire (2) est assurée par une bague d'étanchéité (22) adaptée autour de l'extrémité de recouvrement (27) du premier tronçon tubulaire (1) de plus gros diamètre sur lequel elle est solidarisée en translation, la bague d'étanchéité (22) comportant une extrémité recourbée (26) venant coiffer la tranche du premier tronçon tubulaire (1) et venant porter contre la surface périphérique du second tronçon tubulaire (2).

8. Ensemble tubulaire télescopique selon l'une quelconque des revendications 1 à 6, caractérisé en ce que l'étanchéité entre le premier tronçon tubulaire (1) et le second tronçon tubulaire (2) est réalisée par une bague d'étanchéité (22) adaptée autour de l'extrémité du premier tronçon tubulaire (1) de plus gros diamètre sur lequel elle est solidarisée en rotation et en translation, la bague d'étanchéité (22) comportant une extrémité recourbée (26) venant coiffer une entretoise annulaire (25) insérée entre l'extrémité recourbée (26) de ladite bague (22) et la tranche du premier tronçon tubulaire (1) de plus gros diamètre, l'entretoise pouvant coulisser sur le second tronçon tubulaire (2) de plus petit diamètre.

## Patentansprüche

1. Teleskopische Rohranordnung, umfassend:
- wenigstens einen ersten Rohrabschnitt (1) größeren Durchmessers und einen zweiten Rohrabschnitt (2) kleineren Durchmessers, von denen der zweite Rohrabschnitt (2) mit seinem inneren Ende (4) in das Innere des ersten Rohrabschnittes (1) eingreift und in diesem drehbar und zwischen einer eingezogenen und einer ausgefahrenen Stellung verschiebbar gelagert ist,
- eine axiale Stufe (7) mit einer im wesentlichen konischen Fläche (8), die das innere Ende (4) des zweiten Rohrabschnittes (2) im Inneren des ersten Rohrabschnittes (1) verlängert,
- einen aufweitbaren Klemmring (10) mit einem Mittelabschnitt (12), in den eine im wesentlichen zylindrische, axiale Bohrung (11) eingearbeitet ist, welche begrenzt ist von einer ersten, im wesentlichen konischen Innenfläche (15), die an der im wesentlichen konischen Fläche (8) der axialen Stufe (7) zur Anlage kommt, sowie von einer gegenüberliegenden, zweiten konischen Innenfläche (16), wobei der Klemmring für seine radiale Verformung zwei Reihen von Längsschlitzen (19, 20, 21) hat,
- ein in axialer Richtung wirkendes Klemmorgan (17), das einen Kopf mit einer im wesentlichen konischen Ringfläche (18) hat, die an der zweiten konischen Fläche (16) im Inneren des Klemmrings anliegt, wobei das Klemmorgan (17) dazu dient, den Klemmring (10) gegen die im wesentlichen konische Fläche (8) der in axialer Richtung verlaufenden Stufe (7) zu drücken und dabei den Klemmring radial nach außen zu verformen und gegen die Innenwand des ersten Rohrabschnittes (1) zu drücken,
- Verbindungsmittel für die axiale Verbindung des Klemmorgans (17) mit dem zweiten Rohrabschnitt (2),
**gekennzeichnet durch** die folgenden Merkmale:
- der Klemmring (10) hat zwei Endabschnitte (13, 14) mit axialer Bohrung, die einen größeren Durchmesser als die Bohrung des Mittelabschnittes (12) hat und mit dieser einerseits über die erste konische Innenfläche (15) des Klemmringes und andererseits über die zweite konische Innenfläche (16) des Klemmringes verbunden ist,
- die Schlitze erstrecken sich im wesentlichen über die halbe Länge des Klemmringes (10),
- die konischen Innenflächen (15, 16) befinden sich im wesentlichen im ersten Drittel bzw. im zweiten Drittel der Länge des Klemmringes (10).

2. Teleskopische Rohranordnung nach Anspruch 1, **dadurch gekennzeichnet**, daß die Schlitze (19) der ersten Schlitzreihe die Schlitze (20, 21) der zweiten Schlitzreihe überlappen.

3. Teleskopische Rohranordnung nach Anspruch 1 oder 2, **dadurch gekennzeichnet**, daß der Kopf des Klemmorgans (17) einen Polygonquerschnitt hat und in einen axialen Sitz (28) des Klemmringes (10) eingreift, welcher einen entsprechenden Polygonquerschnitt aufweist und dadurch eine Drehung des Klemmorgans (17) relativ zu dem Klemmring (10) verhindert.

4. Teleskopische Rohranordnung nach einem der vorhergehenden Ansprüche, **dadurch gekennzeichnet**, daß das Klemmorgan (17) eine Schraube ist, deren Kopf den Kopf des Klemmorgans (17) bildet und deren Gewindeschaft in eine axiale Gewindebohrung der sich in axialer Richtung erstreckenden Stufe (7) eingeschraubt ist.

5. Teleskopische Rohranordnung nach einem der Ansprüche 1 bis 3, **dadurch gekennzeichnet**, daß das Klemmorgan (17) eine Mutter ist, die den Kopf des Klemmorgans (17) bildet und auf einen axial vorstehenden Gewindeabschnitt (9) der sich in axialer Richtung erstreckenden Stufe (7) aufgeschraubt ist, welche durch den Klemmring (10) hindurchläuft.

6. Teleskopische Rohranordnung nach einem der vorhergehenden Ansprüche, **dadurch gekennzeichnet**, daß von der Innenwand des ersten Rohrabschnittes (1) Längsrippen abstehen, die in entsprechende Längsnuten des Klemmringes (10) eingreifen und diesen dadurch drehfest mit dem ersten Rohrabschnitt (1) verbinden.

7. Teleskopische Rohranordnung nach einem der vorhergehenden Ansprüche, **dadurch gekennzeichnet**, daß zur Abdichtung zwischen dem ersten Rohrabschnitt (1) und dem zweiten Rohrabschnitt (2) ein Dichtungsring (22) vorgesehen ist, der das Ende der Außenhülle (27) des ersten Rohrabschnittes (1) größeren Durchmessers übergreift, mit dem er nicht verschiebbar verbunden ist, wobei ein hakenförmiges Ende (26) des Dichtungsringes (22) das Ende des ersten Rohrabschnittes (1) umgreift und an der Umfangsfläche des zweiten Rohrabschnittes (2) anliegt.

8. Teleskopische Rohranordnung nach einem der Ansprüche 1 bis 6, **dadurch gekennzeichnet**, daß zur Abdichtung zwischen dem ersten Rohrabschnitt (1) und dem zweiten Rohrabschnitt (2) ein Dichtungsring (22) vorgesehen ist, der das Ende des ersten Rohrabschnittes (1) größeren Durchmessers umschließt, mit dem er sowohl drehfest als auch nicht verschiebbar verbunden ist, wobei ein hakenförmiges Ende (26) des Dichtungsringes (22) einen Distanzring (25) umgreift, der zwischen das hakenförmige Ende (26) des Dichtungsringes (22) und das Ende des ersten Rohrabschnittes (1) größeren Durchmessers eingesetzt und auf dem zweiten Rohrabschnitt (2) kleineren Durchmessers verschiebbar ist.

## Claims

1. Telescoping tubular assembly comprising:
- at least one relatively larger diameter first tubular section (1) and one relatively smaller diameter second tubular section (2), the second tubular section (2) having an inside end (4) accommodated inside the first tubular section (1) and being free to rotate and to slide in the first tubular section (1) between a retracted position and a deployed position,
- an axial end-piece (7) including a generally conical bearing surface (8) in alignment with the inside end (4) of the second tubular section (2) inside the first tubular section (1),
- an expandable locking ring (10) with a central part (12) through which passes a substantially cylindrical axial hole (11) between a first generally conical inside bearing surface (15) adapted to bear against the generally conical bearing surface (8) of the axial end-piece (7) and a conical internal second bearing surface (16) at the opposite end, the ring including two series of longitudinal slits (19, 20, 21) allowing it to deform radially,
- axial clamping means (17) comprising a head having a generally conical annular surface (18) adapted to bear against the second internal conical bearing surface (16) of the ring, the axial clamping means (17) being adapted to push the ring (10) selectively against the generally conical bearing surface (8) of the axial end-piece (7), so deforming the ring radially outwards to press it against the inside wall of the first tubular section (1),
- connecting means for fastening the clamping means (17) and the second tubular section (2) together axially,
characterized in that:
- the ring (10) includes two end parts (13, 14) with axial hole, in which the axial hole is of greater diameter and is joined to the hole in the central part (12) by the first internal conical bearing surface (15) of the ring and the second internal conical bearing surface (16) of the ring, respectively,
- the slits occupy substantially half the length of the ring (10),
- the internal conical bearing surfaces (15, 16) are arranged substantially at one third and two thirds of the length of the ring (10).

2. Telescoping tubular assembly according to claim 1 characterized in that:
- the slits (19) of the first series of slits are interleaved with the slits (20, 21) of the second series of slits.

3. Telescoping tubular assembly according to claim 1 or claim 2 characterized in that the head of the clamping means (17) has a polygonal cross-section and is inserted in an axial housing (28) of the ring (10) having a corresponding polygonal cross-section preventing rotation of the clamping means (17) relative to the ring (10).

4. Telescoping tubular assembly according to any one of claims 1 to 3 characterized in that the clamping means (17) is a screw whose head forms the head of the clamping means (17) and whose screwthreaded shank is screwed into an axial screwthreaded hole of the axial end-piece (7).

5. Telescoping tubular assembly according to any one of claims 1 to 3 characterized in that the clamping means (17) is a nut forming the head of the clamping means (17) and screwing onto a screwthreaded protruding axial part (9) of the axial end-piece (7) passing through the ring (10).

6. Telescoping tubular assembly according to any one of claims 1 to 5 characterized in that longitudinal ribs are provided on the inside surface of the first tubular section (1), said longitudinal ribs engaging in corresponding longitudinal grooves on the ring (10) to prevent the ring (10) from rotating relative to the first tubular section (1).

7. Telescoping tubular assembly according to any one of claims 1 to 6 characterized in that a seal is provided between the first tubular section (1) and the second tubular section (2) by a sealing ring (22) fitted around the overlapping end (27) of the larger diameter first tubular section (1) relative to which it is prevented from moving in translation, the sealing ring (22) including a curved end (26) which caps the edge of the first tubular section (1) and bears against the peripheral surface of the second tubular section (2).

8. Telescoping tubular assembly according to any one of claims 1 to 6 characterized in that a seal is provided between the first tubular section (1) and the second tubular section (2) by a sealing ring (22) fitted around the end of the larger diameter first tubular section (1) relative to which it is prevented from rotating and from moving in translation, the sealing ring (22) including a curved end (26) adapted to cap an annular spacer (25) inserted between the curved end (26) of said ring (22) and the edge of the larger diameter first tubular section (1), the spacer being able to slide on the smaller diameter second tubular section (2).
